# EUROPÄISCHE PATENTSCHRIFT

(11) **EP 3 023 742 B1**
(45) Veröffentlichungstag und Bekanntmachung des Hinweises auf die Patenterteilung: **11.01.2017**
(21) Anmeldenummer: 14193790.4
(22) Anmeldetag: 19.11.2014
(51) Int. Cl.: G01D 5/244, G01D 5/347, G01B 5/00

(54) **Anordnung mit einer an einem Träger befestigten Maßverkörperung**
Assembly comprising a measurement scale attached to a support
Ensemble comprenant une échelle de mesure fixée à un support

(43) Veröffentlichungstag der Anmeldung: 25.05.2016
(73) Patentinhaber: Dr. Johannes Heidenhain GmbH, 83301 Traunreut (DE)
(72) Erfinder: Bauer, Kilian, 83362 Surberg (DE); Huber, Markus, 83301 Traunreut (DE); Sigl, Thomas, 83071 Stephanskirchen (DE)

(56) Entgegenhaltungen:
- EP-A2- 0 416 391
- DE-A1- 4 129 305
- JP-A- 2011 079 221

## Beschreibung

### GEBIET DER TECHNIK

Die vorliegende Erfindung betrifft eine Anordnung mit einer an einem Träger befestigten Maßverkörperung nach dem Oberbegriff des Anspruchs 1.

### STAND DER TECHNIK

Zur Messung der Relativlage zweier Maschinenteile ist an einem der Maschinenteile eine Maßverkörperung zu befestigen und am anderen der zueinander beweglichen Maschinenteile eine Abtasteinheit. Bei der Positionsmessung wird eine Messteilung der Maßverkörperung von der Abtasteinheit abgetastet und positionsabhängige Abtastsignale generiert.

Die EP 0 416 391 A2 offenbart eine Anordnung mit einer an einem Träger befestigten Maßverkörperung, wobei die Befestigung mittels eines Flüssigkeitsfilms erfolgt und die Maßverkörperung durch die Kapillarwirkung des Flüssigkeitsfilms gegen eine Anbaufläche des Trägers gezogen wird.

Gemäß der EP 0 264 801 B1 ist eine Maßverkörperung an einem Träger montiert, indem diese sich auf Kugeln abstützt. Die Kugeln sind in kleinen Bereichen rollbeweglich gelagert. Die Haltekraft zwischen der Maßverkörperung und dem Träger wird durch Federn eingeleitet. Durch die Kombination Kugel und Feder ist eine Befestigung und Unterstützung nur im Randbereich der Maßverkörperung möglich, wodurch keine ebene Lagerung innerhalb des tatsächlichen Messbereichs der Maßverkörperung ermöglicht wird.

### ZUSAMMENFASSUNG DER ERFINDUNG

Aufgabe der Erfindung ist es, eine Anordnung mit einer an einem Träger befestigten Maßverkörperung anzugeben, wobei die Maßverkörperung möglichst driftfrei und temperaturstabil in seiner Lage gehalten wird, so dass eine reproduzierbare Positionsmessung ermöglicht wird.

Gelöst wird diese Aufgabe durch die im Anspruch 1 angegebene Anordnung sowie mit der im Anspruch 11 angegebenen Positionsmesseinrichtung.

Vorteilhafte Ausführungen der erfindungsgemäßen Anordnung sowie Positionsmesseinrichtung ergeben sich aus den Maßnahmen, die in den abhängigen Ansprüchen aufgeführt sind.

Einzelheiten und Vorteile der vorliegenden Erfindung werden anhand der nachfolgenden Beschreibung von Ausführungsbeispielen in Verbindung mit den Figuren erläutert.

### KURZE BESCHREIBUNG DER ZEICHNUNGEN

Es zeigt
- Figur 1: einen Längsschnitt einer erfindungsgemäß ausgebildeten Anordnung;
- Figur 2: einen Längsschnitt eines zweiten Ausführungsbeispiels;
- Figur 3: einen Querschnitt eines dritten Ausführungsbeispiels;
- Figur 4: einen Querschnitt eines vierten Ausführungsbeispiels, und
- Figur 5: einen Querschnitt eines fünften Ausführungsbeispiels.

### BESCHREIBUNG DER AUSFÜHRUNGSFORMEN

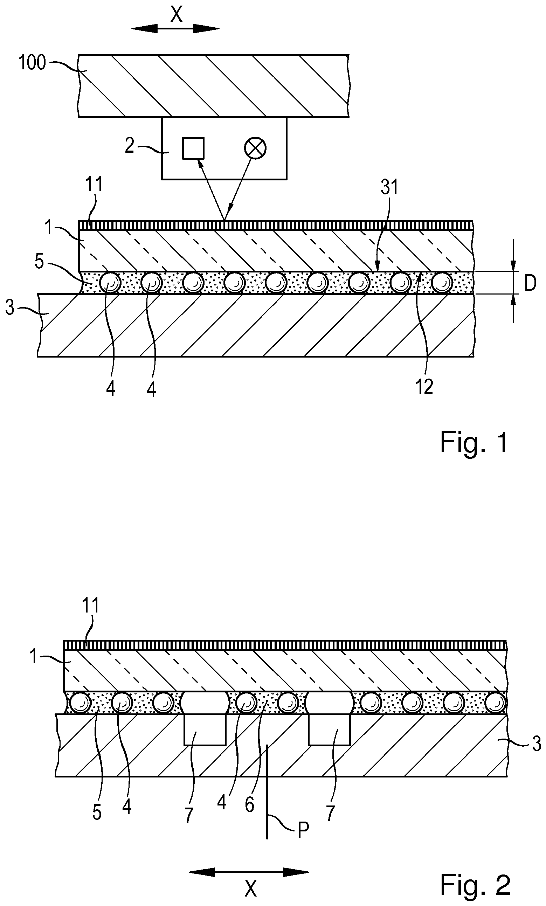

Anhand der Figur 1 wird ein erstes Ausführungsbeispiel der Erfindung erläutert. Die dargestellte Positionsmesseinrichtung umfasst eine Anordnung aus einer an einem Träger 3 angeordneten Maßverkörperung 1 und einer Abtasteinheit 2. Im Betrieb der Positionsmesseinrichtung ist die Abtasteinheit 2 an einem relativ gegenüber dem Träger 3 in Messrichtung X beweglichen Objekt 100 befestigt. Die Maßverkörperung 1 weist eine von der Abtasteinheit 2 berührungslos abtastbare Messteilung 11 auf. Die Maßverkörperung 1 besteht vorzugsweise aus einem Material mit vernachlässigbar kleinem thermischen Ausdehnungskoeffizienten, insbesondere mit einem thermischen Ausdehnungskoeffizient a im Temperaturbereich von 0° bis 50° kleiner als 1,5 x 10⁻⁶K⁻¹, insbesondere aber kleiner als 0,1 x 10⁻⁶K⁻¹. Derartige Materialien sind Glas bzw. Glaskeramik (z. B. ZERODUR) oder Metalle wie z.B. Invar.

Die Messteilung 11 ist eine inkrementale Teilung, die bei der Positionsmessung in Messrichtungen X von der Abtasteinheit 2 zur Erzeugung von positionsabhängigen Abtastsignalen lichtelektrisch abgetastet wird. Die Messteilung 11 kann ein reflektierendes Amplitudengitter oder ein Phasengitter sein, das in bekannter Weise zur hochgenauen interferentiellen Positionsmessung dient.

Die Maßverkörperung 1 ist an dem Träger 3 befestigt. Dieser Träger 3 besteht in der Regel aus einem Material dessen Ausdehnungskoeffizient vom Ausdehnungskoeffizient der Maßverkörperung 1 abweicht. Aus diesem Grund ist es erforderlich die Maßverkörperung 1 vom Träger 3 entkoppelt zu befestigen. Entkoppelt bedeutet dabei, dass sich Träger 3 und Maßverkörperung 1 unabhängig voneinander temperaturbedingt verlagern können ohne dass mechanische Spannungen vom Träger 3 auf die Maßverkörperung 1 übertragen werden, welche die Genauigkeit und Reproduzierbarkeit der Positionsmessung nachteilig beeinflussen. Die Lagerung der Maßverkörperung 1 am Träger 3 erfolgt somit schwimmend.

Die Maßverkörperung 1 ist am Träger 3 mittels Abstandhalter 4 abgestützt. Diese Abstandhalter 4 sind auf der Oberfläche 31 des Trägers 3 zweidimensional räumlich verteilt angeordnet. Die Anordnung der Abstandhalter 4 ist derart, dass die Maßverkörperung 1 zumindest innerhalb eines Bereiches der Messteilung 11 unterstützt wird, welcher zur Positionsmessung von der Abtasteinheit 2 abtastbar ist. Die Unterstützung erfolgt also zumindest innerhalb eines Bereiches der Messteilung 11, der für die Positionsmessung genutzt wird.

Die Abstandhalter 4 sind in eine Schicht 5 beweglich eingebettet und darin beweglich gebunden. Hierzu ist die Schicht 5 zwischen der Maßverkörperung 1 und dem Träger 3 derart angeordnet, dass diese die Maßverkörperung 1 am Träger 3 haftend hält. Aufgrund der Oberflächenspannung der Schicht 5 werden Maßverkörperung 1 und Träger 3 aneinander gezogen. Die Schicht 5 hat mehrere Funktionen. Sie verbindet die Maßverkörperung 1 und den Träger 3 haftend miteinander aufgrund von Adhäsionskräften der Schicht 5. Die Schicht 5 gleicht darüber hinaus unterschiedliche thermische Ausdehnungen zwischen dem Träger 3 und der Maßverkörperung 1 aus. Zusätzlich sorgt die Schicht 5 dafür, dass die Abstandhalter 4 im Spalt zwischen der Maßverkörperung 1 und dem Träger 3 gehalten werden, da die Abstandhalter 4 in die Schicht 5 eingebettet sind und das Schichtmaterial aufgrund der Kapillarwirkung im Spalt zwischen der Maßverkörperung 1 und dem Träger 3 gehalten wird. Die Schicht 5 bildet somit eine Art Käfig für die Abstandhalter 4, also den Kugelkäfig bei kugelförmigen Abstandhaltern 4. Weiterhin hat die Schicht 5 die Funktion als Gleitmittel für die Abstandhalter 4 zu wirken um die Reibung (Gleitreibung bzw. Rollreibung) zwischen den Abstandhaltern 4 und der Maßverkörperung 1 sowie zwischen den Abstandhaltern 4 und dem Träger 3 zu minimieren. Zusätzlich bewirken die Abstandhalter 4 eine exakte Einhaltung der Dicke D der Schicht 5 und somit die Möglichkeit einer definierten Einstellung der erforderlichen Haltekraft einerseits und der Begrenzung der erforderlichen Schubkraft andererseits um eine temperaturbedingte Verlagerung zwischen Maßverkörperung 1 und Träger 3 rückwirkungsfrei zu ermöglichen.

Die Schicht 5 ist vorzugsweise ein viskoser Flüssigkeitsfilm, insbesondere ein Newtonsches Fluid hoher Viskosität, beispielsweise ein Ölfilm (z.B. Silikonöl) oder auch ein Bingham Fluid. Die Schicht 5 kann auch aus einer viskoelastischen Flüssigkeit, auch Gel genannt, gebildet sein.

Typische Werte für die Dicke der Maßverkörperung 1 liegen bei 0,5mm bis 15mm. Die Dicke D der Schicht 5 und somit die Höhe der Abstandhalter 4 ist beispielsweise 1µm bis 500µm, typisch 50µm.

Die Abstandhalter 4 bestehen aus einem Material, das auftretenden Druckkräften möglichst ohne Verformung standhält. Ein geeignetes Material ist insbesondere Glas, Glaskeramik, aber auch Keramik oder Metall.

Vorteilhaft kann es sein, wenn die Abstandhalter 4 aus einem Material bestehen mit einer Dichte zumindest annähernd der Dichte des Materials der Schicht 5. Dies hat Vorteile bei der Einmischung der Abstandhalter 4 in die Schicht 5, da eine gleichmäßige Verteilung der Abstandhalter 4 im Material der Schicht 5 gewährleistet ist. Weiterhin ist gewährleistet, dass keine Entmischung zwischen den Abstandhaltern 4 und dem Material der Schicht 5 erfolgt, es ist nämlich gewährleistet, dass sich die Abstandhalter 4 bei allen Anbaulagen im Gleichgewicht in dem Material der Schicht 5 -also in dem Spalt der Dicke D- befindet.

Als Abstandhalter 4 eignen sich besonders Kugeln oder Rollen. Der Durchmesser dieser Kugeln oder Rollen entspricht der Dicke D der Schicht 5. Somit kontaktieren die Kugeln bzw. die Rollen einerseits die Maßverkörperung 1 auf seiner Unterseite, also der Auflagefläche 12, jeweils punktförmig und andererseits den Träger 3 auf seiner Oberfläche 31 ebenfalls punktförmig. Die Kugeln bzw. Rollen sind rollbeweglich in die Schicht 5 eingebettet. Kugeln eignen sich als Abstandhalter 4 besonders, da diese in der Schicht 5 zweidimensional rollbeweglich gelagert sind.

Das in der Figur 2 dargestellte zweite Ausführungsbeispiel unterscheidet sich gegenüber dem ersten Ausführungsbeispiel nur dadurch, dass die Maßverkörperung 1 zusätzlich an einer Position P (in Messrichtung X bezogen) am Träger 3 ortsfest lagefixiert ist. An dieser Position P ist die Maßverkörperung 1 ebenfalls mittels Abstandhalter 4 unterstützt. Die Abstandhalter 4 sind an der Position P mittels eines Haltemittels 6 einerseits ortsfest an der Maßverkörperung 1 und andererseits ortsfest am Träger 3 fixiert. Das Haltemittel 6 ist beispielsweise ein fest ausgehärteter Klebstoff. Das schichtförmige Haltemittel 6 an der Position P -auch Fixpunkt genanntist in diesem Beispiel von der Schicht 5 mittels jeweils einer Ausnehmung 7 im Träger 3 getrennt. Die Ausnehmung 7 fungiert auch als Fließstopp für das Material der Schicht 5.

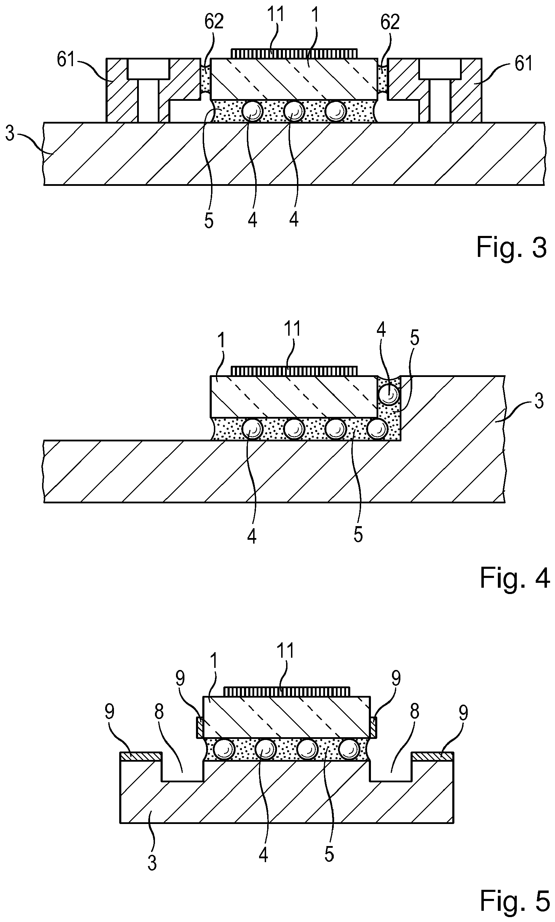

Das in der Figur 3 dargestellte dritte Ausführungsbeispiel unterscheidet sich gegenüber dem ersten Ausführungsbeispiel nur dadurch, dass in dem dargestellten Querschnitt eine Möglichkeit einer seitlichen Führung der Maßverkörperung 1 angegeben ist. Die seitliche Führung ist als Längsführung für die Maßverkörperung 1 ausgebildet und besteht aus seitlich angeordneten Führungselementen 61. Zur reibungsfreien Führung der Maßverkörperung 1 ist zwischen den Seitenflächen der Maßverkörperung 1 und den Führungselementen 61 jeweils ein viskoser Flüssigkeitsfilm 62 angeordnet.

Das in der Figur 4 dargestellte vierte Ausführungsbeispiel unterscheidet sich gegenüber dem ersten Ausführungsbeispiel dadurch, dass in dem dargestellten Querschnitt eine weitere Möglichkeit einer seitlichen Führung der Maßverkörperung 1 angegeben ist. In diesem Fall ist die Maßverkörperung 1 nur an einer seiner beiden Seitenflächen längsgeführt. Diese Längsführung erfolgt mit den gleichen Mitteln wie die Unterstützung der Maßverkörperung 1, nämlich mittels Abstandhalter 4 - insbesondere Kugeln - und der Schicht 5.

Das in der Figur 5 dargestellte fünfte Ausführungsbeispiel unterscheidet sich gegenüber dem ersten Ausführungsbeispiel nur dadurch, dass mehrere Möglichkeiten der Realisierung eines Fließstopps für das Material der Schicht 5 dargestellt sind. Ähnlich wie die in Figur 2 dargestellte Ausnehmung 7 kann ein Fließstopp durch eine seitlich der Maßverkörperung 1 und in Messrichtung X verlaufende Ausnehmung 8 im Träger 3 vorgesehen sein. Alternativ oder zusätzlich kann ein Fließstopp durch partielles Beschichten von Maßverkörperung 1 und / oder Träger 3 mit einem benetzungshemmenden Material 9 gebildet sein. Das Vorsehen einer benetzungshemmenden Beschichtung wird auch Epilamisierung genannt.

Für alle Ausführungsbeispiele gilt Folgendes.
Zur Längenmessung kann die Maßverkörperung 1 -wie in den Ausführungsbeispielen dargestellt- stabförmig ausgebildet sein. Die Maßverkörperung kann aber auch bandförmig ausgebildet sein und der Träger 3 als stabiler und biegesteifer Körper. Der Träger kann gemeinsam mit dem Maßband handhabbar ausgebildet sein, indem der Träger in Form eines Profils ausgebildet ist, welches zur Positionsmessung an ein zu messendes Objekt angebaut wird. Die Maßverkörperung kann in einer Nut dieses Profils erfindungsgemäß gehaltert sein und / oder das Profil kann ein Gehäuse für die Maßverkörperung bilden.

Zur Winkelmessung kann die Maßverkörperung kreisförmig ausgebildet sein oder es kann eine bandförmige Maßverkörperung an einer Innen- oder Außenfläche einer Trommel angeordnet sein, wobei die Trommel den Träger der Maßverkörperung bilden kann.

Anstelle oder zusätzlich zu der inkrementalen Messteilung 11 kann auch eine absolute Codierung vorgesehen werden. Weiterhin kann die Messteilung zur Messung in zwei Dimensionen ausgebildet sein, wobei derartige Messteilungen auch Kreuzgitter oder Schachbrett-Gitter bezeichnet werden.

Die Maßverkörperung kann auch eine Abtastplatte der Positionsmesseinrichtung sein.

Die Erfindung ist nicht auf das lichtelektrische Abtastprinzip beschränkt. Die Messteilung kann auch magnetisch, kapazitiv oder induktiv abtastbar ausgebildet sein.

## Patentansprüche

1. Anordnung mit einer an einem Träger (3) befestigten Maßverkörperung (1), wobei die Maßverkörperung (1) eine Messteilung (11) aufweist und über Abstandhalter (4) am Träger (3) derart abgestützt und derart entkoppelt befestigt ist, dass unterschiedliche thermische Ausdehnungen zwischen dem Träger (3) und der Maßverkörperung (1) ausgeglichen werden,
**dadurch gekennzeichnet dass**
zwischen der Maßverkörperung (1) und dem Träger (3) eine Schicht (5) angeordnet ist, welche die Maßverkörperung (1) haftend am Träger (3) hält, und dass die Abstandhalter (4) beweglich in diese Schicht (5) eingebettet sind, wobei die Schicht (5) eine viskose Flüssigkeit oder eine viskoelastische Flüssigkeit ist.

2. Anordnung nach Anspruch 1, wobei die Abstandhalter (4) zweidimensional verteilt und der zur Positionsmessung von einer Abtasteinheit (2) abtastbaren Messteilung (11) gegenüberliegend angeordnet sind.

3. Anordnung nach einem der vorhergehenden Ansprüche, wobei die Dicke (D) der Schicht (5) 1 µm bis 500 µm beträgt.

4. Anordnung nach einem der vorhergehenden Ansprüche, wobei die Abstandhalter (4) aus Glas bestehen.

5. Anordnung nach einem der vorhergehenden Ansprüche 1 bis 3, wobei die Abstandhalter (4) aus einem Material bestehen mit einer Dichte zumindest annähernd der Dichte des Materials der Schicht (5).

6. Anordnung nach einem der vorhergehenden Ansprüche, wobei die Abstandhalter (4) in der Schicht (5) rollbeweglich Kugeln oder Rollen sind.

7. Anordnung nach Anspruch 6, wobei der Durchmesser der Kugeln oder Rollen 1 µm bis 500 µm beträgt.

8. Anordnung nach einem der vorhergehenden Ansprüche, wobei die Maßverkörperung (1) an einer Position (P) ortsfest am Träger (3) befestigt ist.

9. Anordnung nach einem der vorhergehenden Ansprüche, wobei am Träger (3) und / oder an der Maßverkörperung (1) ein Fließstopp (7, 8, 9) für das Material der Schicht (5) vorgesehen ist.

10. Positionsmesseinrichtung mit einer Anordnung nach einem der vorhergehenden Ansprüche und mit einer Abtasteinheit (2) zur Abtastung der Messteilung (11) der Maßverkörperung (1).

## Claims

1. Assembly comprising a measurement scale (1) fixed to a support (3), the measurement scale (1) having a measuring graduation (11) and being supported on the support (3) via spacers (4) and fixed in a decoupled manner in such a way that different thermal expansions between the support (3) and the measurement scale (1) are compensated for, **characterized in that**
between the measurement scale (1) and the support (3) there is arranged a layer (5) which holds the measurement scale (1) in a manner adhering to the support (3), and **in that** the spacers (4) are embedded movably in this layer (5), the layer (5) being a viscous liquid or a visco-elastic liquid.

2. Assembly according to Claim 1, wherein the spacers (4) are distributed two-dimensionally and are arranged opposite the measuring graduation (11) that can be sensed by a sensing unit (2) for position measurement.

3. Assembly according to one of the preceding claims, wherein the thickness (D) of the layer (5) is 1 µm to 500 µm.

4. Assembly according to one of the preceding claims, wherein the spacers (4) consist of glass.

5. Assembly according to one of the preceding Claims 1 to 3, wherein the spacers (4) consist of a material having a density at least approximately of the density of the material of the layer (5).

6. Assembly according to one of the preceding claims, wherein the spacers (4) in the layer (5) are spheres or rollers that can move by rolling.

7. Assembly according to Claim 6, wherein the diameter of the spheres or rollers is 1 µm to 500 µm.

8. Assembly according to one of the preceding claims, wherein the measurement scale (1) is fixed to the support (3) in a fixed location at a position (P).

9. Assembly according to one of the preceding claims, wherein a flow stop (7, 8, 9) for the material of the layer (5) is provided on the support (3) and/or on the measurement scale (1).

10. Position measuring device comprising an arrangement according to one of the preceding claims and comprising a sensing unit (2) for sensing the measuring graduation (11) of the measurement scale (1).

## Revendications

1. Arrangement comprenant un étalon (1) fixé à un support (3), l'étalon (1) possédant une graduation de mesure (11) et étant supporté sur le support (3) par le biais d'entretoises (4) et fixé de manière découplée de telle sorte que les dilatations thermiques différentes entre le support (3) et l'étalon (1) sont compensées, **caractérisé en ce que**
une couche (5) est disposée entre l'étalon (1) et le support (3), laquelle maintient l'étalon (1) au support (3) par adhérence, et **en ce que** les entretoises (4) sont incorporées dans cette couche (5) avec mobilité, la couche (5) étant un liquide visqueux ou un liquide viscoélastique.

2. Arrangement selon la revendication 1, les entretoises (4) étant divisées en deux dimensions et étant disposées à l'opposé de la graduation de mesure (11) pouvant être palpée par une unité de palpage (2) en vue de mesurer la position.

3. Arrangement selon l'une des revendications précédentes, l'épaisseur (D) de la couche (5) étant de 1 µm à 500 µm.

4. Arrangement selon l'une des revendications précédentes, les entretoises (4) étant constituées de verre.

5. Arrangement selon l'une des revendications 1 à 3, les entretoises (4) se composant d'un matériau ayant une densité au moins approchant la densité du matériau de la couche (5)..

6. Arrangement selon l'une des revendications précédentes, les entretoises (4) dans la couche (5) étant des billes ou des rouleaux à mobilité de roulement.

7. Arrangement selon la revendication 6, le diamètre des billes ou des rouleaux étant de 1 µm à 500 µm.

8. Arrangement selon l'une des revendications précédentes, l'étalon (1) étant fixé à une position (P) fixe sur le support (3).

9. Arrangement selon l'une des revendications précédentes, un arrêt d'écoulement (7, 8, 9) pour le matériau de la couche (5) se trouvant sur le support (3) et/ou sur l'étalon (1).

10. Dispositif de mesure de position comprenant un arrangement selon l'une des revendications précédentes et comprenant une unité de palpage (2) destinée à palper la graduation de mesure (11) de l'étalon (1).
